# EUROPÄISCHE PATENTANMELDUNG

(11) **EP 1 780 520 A2**
(43) Veröffentlichungstag der Anmeldung: **02.05.2007**
(21) Anmeldenummer: 07003262.8
(22) Anmeldetag: 26.07.2001
(51) Int. Cl.: G01G 19/414

(54) **Waage und Verfahren zum Betreiben einer Waage**

(30) Priorität: 31.08.2000 DE 10042966
(62) Teilanmeldung aus: 01955374.2
(71) Anmelder: Mettler-Toledo (Albstadt) GmbH, 72458 Albstadt (DE)
(72) Erfinder: Kreidler, Sabine, 78736 Epfendorf (DE); Weber, Klaus, Dürrwangen 72336 Balingen (DE); Schmid, Karl-Heinz, 72351 Geislingen (DE)
(74) Vertreter: Leinweber & Zimmermann

(57) **Zusammenfassung**

Bei einer Waage mit einer bei jedem Wägevorgang zum Erzeugen von das Gewicht einer Last darstellenden Gewichtssignalen betreibbaren Wägezelle und einer die Gewichtssignale empfangenden Signalverarbeitungsanordnung zum Erzeugen von Gewichtsdaten auf Grundlage der Gewichtssignale, auf Grundlage der Gewichtsdaten ermittelten Angaben, wie etwa Kaufpreisen, und/oder den jeweiligen Wägevorgang oder eine Gruppe von zusammengehörigen Wägevorgängen bezeichnenden Kennungsdaten aufweisenden Wägedaten, wird eine Weiterbildung vorgeschlagen, bei der die Signalverarbeitungsanordnung eine Verschlüsselungseinrichtung aufweist, mit der auf Grundlage von zumindest einem Teil der Wägedaten Verschlüsselungsdaten erzeugt werden können und die Signalverarbeitungsanordnung zum Ausgeben eines zumindest den zum Erzeugen der Verschlüsselungsdaten benutzten Teil der Wägedaten und die Verschlüsselungsdaten aufweisenden Datensatzes betreibbar ist.

## Beschreibung

Die Erfindung betrifft eine Waage mit einer bei jedem Wägevorgang zum Erzeugen von das Gewicht einer Last darstellenden Gewichtssignalen betreibbaren Wägezelle und einer die Gewichtssignale empfangenden Signalverarbeitungsanordnung zum Erzeugen von Gewichtsdaten auf Grundlage der Gewichtssignale, auf Grundlage der Gewichtsdaten ermittelten Angaben, wie etwa Kaufpreisen, und/oder den jeweiligen Wägevorgang oder eine Gruppe von zusammengehörigen Wägevorgängen bezeichnenden Kennungsdaten aufweisenden Wägedaten, ein eine derartige Waage aufweisendes Verbundsystem, sowie Verfahren zum Betreiben einer derartigen Waage und ein entsprechendes Verbundsystem.

Derartige Waagen werden beispielsweise in Einzelhandelsgeschäften oder Supermärkten zum Abwägen einzelner Produkte, wie etwa Fleisch, Wurst, Käse, Obst oder Gemüse eingesetzt. Dabei wird üblicherweise auf Grundlage der Gewichtsdaten und den Waren zugeordneten Grundpreisen der Kaufpreis für die abgewogenen Produkte ermittelt. Dabei kann dieser Grundpreis direkt über eine Tastatur eingegeben werden, oder unter Einsatz einer beispielsweise mit einem Strichcodeleser ausgelesenen Kennung aus einem Speicher abgerufen werden. Beim Betrieb herkömmlicher Waagen werden in vielen Fällen bei der Abwicklung einzelner Verkaufsvorgänge eine Vielzahl von Wägevorgängen ausgeführt, wobei die dabei erzeugten Wägedaten gemeinsam verarbeitet, insbesondere bei Abschluß des Verkaufsvorganges ausgedruckt werden müßten. Dazu werden die Wägedaten üblicherweise in den einzelnen Verkaufsvorgängen zugeordneten Buchungsspeichern abgelegt. Im Verlauf eines Verkaufsvorganges kann es auch erforderlich werden, mehrere Waagen zu benutzen und die an einer zuvor benutzten Waage erzeugten Wägedaten mit einer anderen Waage weiterzuverarbeiten. Dazu können diese Wägedaten in bekannten Waagenverbundsystemen über entsprechende Datenleitungen übertragen werden.

Im Hinblick auf den für den Betrieb der bekannten Waagen, insbesondere für den Betrieb von Waagen in einem Waagen-Verbundsystem, erforderlichen Funktionsumfang weisen moderne Waagen eine sog. PC-Architektur mit einem herkömmlichen PC main board, einer herkömmlichen Graphikkarte, einer daran angeschlossenen Anzeigeeinrichtung, einer Festplatte, ggf. weiterer Laufwerke zum Lesen anderer Speichermedien, einer oder mehreren Schnittstellen usw. auf, wobei das PC main board einen Teil der Signalverarbeitungsanordnung bildet. Darüber hinaus weist diese Signalverarbeitungsanordnung üblicherweise auch noch eine die von der Wägezelle in Form von meßtechnischen Rohwerten abgegebenen Gewichtssignale empfangende Signalverarbeitungseinrichtung auf, in der aus den üblicherweise in Form digitaler Rohwerte vorliegenden Gewichtssignalen unter Verwendung bauartspezifischer und gerätespezifischer Parameter den tatsächlichen Gewichtswert darstellende Gewichtsdaten erzeugt und über einen entsprechenden I/O-Port bzw. eine entsprechende Schnittstelle an das PC main board zur weiteren Verarbeitung angelegt werden. Diese Signalverarbeitungseinrichtung bekannter Waagen ist üblicherweise physikalisch von dem PC main board getrennt und in Form einer separaten Schaltung bzw. Steckkarte verwirklicht. Auf diese Weise kann die notwendige Eichsicherheit bei der Ermittlung der die Gewichtswerte darstellenden Gewichtsdaten besonders einfach gewährleistet werden.

Bei den bekannten Waagen werden die mit der Signalverarbeitungseinrichtung ermittelten Gewichtsdaten mit Hilfe eines vorgegebenen Programms aus der Signalverarbeitungseinrichtung ausgelesen und beispielsweise zur Ermittlung der Preisdaten weiterverarbeitet. Darüber hinaus kann dieses vorgegebene Programm auch zur Übertragung der Gewichtsdaten, der daraus abgeleiteten Angaben usw. zu anderen Geräten, insbesondere Waagen benutzt werden. Im Hinblick auf die einschlägigen eichrechtlichen Vorschriften müssen die zur Verarbeitung und/oder Übertragung Wägedaten eingesetzten Programme zusammen mit der Hardware von der zuständigen Eichbehörde abgenommen werden. Dabei muß diese Abnahme üblicherweise jedesmal dann wiederholt werden, wenn eine neue Funktion in das Programm aufgenommen werden soll oder ein Benutzer zusätzlich zu dem vorgegebenen und abgenommenen Programm ein eigenes Programm auf der Waage benutzen will, wie etwa ein Lagerverwaltungsprogramm, ein Buchhaltungsprogramm oder eine Warenwirtschaftsanwendung. Aus diesem Grund wird in vielen Fällen von dem Einsatz der bekannten PC-Waagen für die Ausführung entsprechender Programme bzw. als Bestandteil eines übergeordneten Warenwirtschaftssystems abgesehen, weil derartige Programme bzw. Systeme häufig Änderungen erfahren und es wirtschaftlich nicht sinnvoll ist, bei jeder dieser Änderungen eine erneute eichrechtliche Prüfung des Gesamtsystems durchführen zu lassen.

Dieses Problem ist bereits in dem schon 1995 veröffentlichten "WELMEC-Leitfaden für die Prüfung von Software für nichtselbsttätige Waagen" angesprochen. In diesem Leitfaden sind wesentliche Anforderungen an den Schutz der eichpflichtigen Software gegen unbeabsichtigte und absichtliche Änderungen, sowie wesentliche Anforderungen an die Software für frei programmierbare Module oder Zusatzeinrichtungen von eichpflichtigen Waagen zusammengestellt. Grundsätzlich sind in diesem Leitfaden in Übereinstimmung mit dessen Zielsetzung jedoch nur wesentliche Eigenschaften der Waagen bzw. der zum Betreiben dieser Waagen eingesetzten Software angegeben, ohne konkrete technische Lösungen zu beschreiben. Lediglich hinsichtlich des Schutzes der eichpflichtigen Software, welche sowohl die eichpflichtigen Funktionen, wie etwa die Gewichtsermittlung, die Preisberechnung, die Sichtdarstellung dieser Daten und den Ausdruck dieser Daten, sowie die eichpflichtigen bauartspezifischen und gerätespezifischen Parameter umfaßt, wird vorgeschlagen zur Sicherung gegen absichtliche und unabsichtliche Änderungen, eine Checksumme über den Maschinencode, der die eichpflichtigen Programmteile und Parameter enthält, zu bilden und den Programmstart der eichpflichtigen Software zu verhindern, sobald anhand eines Vergleiches dieser Checksumme mit einer vorgegebenen Checksumme eine Veränderung des Maschinencodes festgestellt wird.

Hinsichtlich der Kommunikation zwischen der eichpflichtigen Software und den frei programmierbaren, nichteichpflichtigen Software-Teilen wird der Einsatz einer rückwirkungsfreien Software-Schnittstelle vorgeschlagen, wobei eine Software-Schnittstelle als rückwirkungsfrei definiert wird, wenn nur eine genau definierte Menge Parameter und Funktionen des eichpflichtigen Software-Teils über diese Schnittstelle beeinflußt werden kann und die beiden Software-Teile keine Informationen über irgendeine andere (nicht definierte) Verbindung austauschen können.

Diese Lösungen ermöglichen den Betrieb frei programmierbarer Programmteile auf eichpflichtigen Waagen ohne bei jeder Änderung der eichpflichtigen Programmteile eine eichrechtliche Abnahme durchführen lassen zu müssen. Allerdings ist es mit den in dem WELMEC-Leitfaden angegebenen Lösungsansätzen noch nicht möglich, mit Hilfe eichpflichtiger Funktionen erhaltene Daten, wie etwa Gewichtsdaten und daraus abgeleitete Daten, insbesondere Preisdaten, aus dem geschützten Programmteil einer Waage auszulesen, mit einem nichteichpflichtigen Programmteil zu bearbeiten oder an eine andere Waage zu übertragen und danach wieder in den eichpflichtigen Programmteil dieser oder einer anderen Waage einzulesen, weil mit den genannten Maßnahmen eine Manipulation der Wägedaten mit dem frei programmierbaren Programmteil und eine Sichtdarstellung bzw. ein Ausdruck dieser manipulierten Wägedaten an einer eichpflichtigen Vorrichtung, wie etwa einer Waage nicht verhindert werden kann.

Angesichts dieser Probleme im Stand der Technik liegt der Erfindung die Aufgabe zugrunde, eine Waage der eingangs beschriebnen Art bereitzustellen, welche unter Gewährleistung der Eichsicherheit die Übertragung von eichpflichtigen Daten zwischen einzelnen Programmteilen oder Geräten unter Verwendung frei programmierbarer und nichteichpflichtiger Programme ermöglicht.

Erfindungsgemäß wird diese Aufgabe durch eine Weiterbildung der bekannten Waagen gelöst, die im wesentlichen dadurch gekennzeichnet ist, daß die Signalverarbeitungsanordnung eine Verschlüsselungseinrichtung aufweist, mit der auf Grundlage von zumindest einem Teil der Wägedaten Verschlüsselungsdaten erzeugt werden können, und die Signalverarbeitungsanordnung zum Ausgeben eines zumindest den zum Erzeugen der Verschlüsselungsdaten benutzten Teil der Wägedaten und die Verschlüsselungsdaten aufweisenden Datensatzes betreibbar ist.

Diese Erfindung geht auf die verblüffend einfache Erkenntnis zurück, daß bei einem Datenaustausch zwischen eichpflichtigen Programmteilen und frei programmierbaren Programmteilen ein wirksamer Schutz gegen Manipulationen der Daten mit dem frei programmierbaren Programmteil unter gleichzeitiger Gewährleistung der Möglichkeit diese Daten mit dem frei programmierbaren Programmteil zu verarbeiten, erreicht werden kann, wenn die Daten vor der Ausgabe an den frei programmierbaren Programmteil mit einer geeigneten, dann ebenfalls eichpflichtigen Verschlüsselungseinrichtung verschlüsselt werden und zusammen mit den so erhaltenen Verschlüsselungsdaten an die frei programmierbaren Programmteile übergeben werden. Bei der anschließenden Übergabe dieser Daten an eichpflichtige Programmteile derselben Waage oder einer anderen Waage können unter Verwendung der eichpflichtigen Verschlüsselungseinrichtung erneut Verschlüsselungsdaten aus den übergebenen Wägedaten erzeugt und mit den ebenfalls übergebenen Verschlüsselungsdaten des Datensatzes verglichen werden, um so festzustellen, ob Manipulationen der Wägedaten vorgenommen worden sind.

Zweckmäßigerweise bildet die Verschlüsselungseinrichtung der erfindungsgemäßen Waage einen Teil des eichpflichtigen und mit Hilfe der vorstehend bereits erläuterten Checksummen gegen Manipulation gesicherten Programms. Dabei kann sowohl bei der Bildung der Check- bzw. Prüfsumme über die eichpflichtigen Programm-Module und Parameter als auch bei der Verschlüsselung der Gewichtsdaten ein bekannter Algorithmus (z.B. CRC32), in den jedoch ein geheimer Schlüssel eingeht, benutzt werden. Dabei ist die Prüfsumme das Ergebnis der Ausführungen des Algorithmus bzw. der Berechnungsvorschrift, die aus einer gegebenen Datenmenge eine Zahlenfolge berechnet, die für diese Datenmenge wie ein Fingerabdruck ist. Das heißt selbst kleinste Änderungen an den Eingabedaten bewirken eine Änderung der Prüfsumme. Die Berechnungsvorschrift wird dabei zweckmäßigerweise so gewählt, daß Änderungen der Daten eine starke Änderung der Prüfsumme bewirken, es besonders unwahrscheinlich ist, daß unterschiedliche Eingabedaten gleiche Prüfsummen liefern, es besonders schwierig ist, aus der Prüfsumme und den Daten Rückschlüsse auf die Parameter der Berechnungsvorschrift zu ziehen und die Prüfsummen gleichmäßig in den zur Verfügung stehenden Werteraum verteilt sind. Wenn die Verschlüsselungseinrichtung der erfindungsgemäßen Waage diese Anforderungen erfüllt, kann die Weiterverarbeitung, insbesondere die Sichtdarstellung manipulierter Wägedaten mit dem eichpflichtigen Programmteil zuverlässig verhindert werden, weil Veränderungen der Wägedaten mit Hilfe der in dem gesicherten Programm enthaltenen Verschlüsselungseinrichtung unter Verwendung der Verschlüsselungsdaten erkannt werden können.

Wie vorstehend bereits im Zusammenhang mit herkömmlichen Waagen im einzelnen erläutert, ist die Signalverarbeitungsanordnung zweckmäßigerweise zum Ansteuern einer Anzeigeeinrichtung und eines Druckers ausgelegt, um so eine Sichtdarstellung zumindest eines Teils der Wägedaten und/oder einen Ausdruck von zumindest einem Teil der Wägedaten zu veranlassen.

Ferner hat es sich auch beim Einsatz erfindungsgemäßer Waagen zur Gewährleistung der Eichsicherheit unter gleichzeitiger Sicherstellung einer einfachen Herstellung und Eichung als besonders zweckmäßig erwiesen, wenn die Signalverarbeitungsanordnung eine zum Erzeugen der Gewichtsdaten auf Grundlage der Gewichtssignale und gerätespezifischer Parameter betreibbare Signalverarbeitungseinrichtung sowie eine physikalisch davon getrennte, beispielsweise in Form einer getrennten Schaltung oder Steckkarte gebildete und die Gewichtsdaten empfangende Datenverarbeitungseinrichtung zum Erzeugen der übrigen Wägedaten aufweist, weil bei dieser Anordnung für sämtliche Waagen dieselbe Datenverarbeitungseinrichtung, wie etwa ein PC main board eingesetzt werden kann und nur die Signalverarbeitungseinrichtung entsprechend den jeweiligen Geräteeigenschaften angepaßt werden muß.

Dabei ist die Datenverarbeitungsanordnung zweckmäßigerweise zum Ausführen eines vorzugsweise auch die Verschlüsselungseinrichtung verwirklichenden vorgegebenen Programms betreibbar, mit dem Gewichtsdaten erzeugt, empfangen und/oder verarbeitet werden. Zur Vermeidung unbeabsichtigter oder beabsichtigter Änderungen umfaßt dieses Programm im Hinblick auf den vorstehend genannten WELMEC-Leitfaden vorzugsweise auch eine Prüfroutine, mit der bei jedem Aufruf des Programms zunächst auf Grundlage der Programmdaten und/oder der zum Erzeugen der Gewichtsdaten benötigten Parameter weitere Verschlüsselungsdaten erzeugt und mit vorgegebenen Prüfdaten verglichen werden. Dabei können diese vorgegebenen Prüfdaten in einer Textdatei hinterlegt sein. Im Hinblick auf die einschlägigen eichrechtlichen Vorschriften ist es nicht zwingend erforderlich, auch die Prüfdaten gegen Änderungen zu sichern, weil diese Prüfdaten lediglich das Ergebnis eines Verschlüsselungsvorganges unter Verwendung eines geheimen Schlüssels darstellen, wobei dieses Ergebnis weder einen Rückschluß auf den Verschlüsselungsvorgang, noch einen Rückschluß auf die verschlüsselten Daten selbst zuläßt.

Beim Einsatz der erfindungsgemäßen Waage unter Verwendung frei programmierbarer Programmteile kann die ungeprüfte Übergabe von Gewichtsdaten an diese frei programmierbaren Programmteile besonders zuverlässig verhindert werden, wenn die Datenverarbeitungseinrichtung beim Aufrufen des eichpflichtigen, vorgegebenen Programms zum Senden eines Passwortes an die Signalverarbeitungseinrichtung betreibbar ist und die Signalverarbeitungseinrichtung eine zum Vergleichen dieses Passwortes mit einem in der Signalverarbeitungseinrichtung abgelegten Passwort betreibbare Vergleichseinrichtung umfaßt und die Übergabe der Gewichtsdaten nur freigibt, wenn eine Übereinstimmung zwischen dem übergebenen Passwort und dem in der Signalverarbeitungseinrichtung abgelegten Passwort festgestellt wird. Dabei ist es bei einer besonders bevorzugten Ausführungsform vorgesehen, daß die Signalverarbeitungseinrichtung einen Sperrmechanismus aufweist, welcher die Übergabe der Gewichtsdaten selbstständig sperrt, wenn nach einer vorhergehenden Übergabe des Passwortes von der Datenverarbeitungseinrichtung innerhalb einer vorgegebenen Zeit, wie etwa 60 Sekunden, das vorgegebene Passwort nicht erneut übermittelt wird. Nach jedem Aus- und Einschalten ist die Signalverarbeitungseinrichtung zweckmäßigerweise so lange gesperrt, bis das Passwort von der Datenverarbeitungseinrichtung gesendet und die Übereinstimmung mit dem in der Signalverarbeitungseinrichtung abgelegten Passwort festgestellt ist.

Wie eingangs bereits erläutert, ist die Datenverarbeitungseinrichtung der erfindungsgemäßen Waage auch zum Ausführen anderer, nichteichpflichtiger Programme betreibbar, mit denen ggf. die von dem vorgegebenen Programm erzeugten Datensätze abgerufen, weiterverarbeitet, an andere Waagen übertragen und/oder von anderen Waagen erhaltene Datensätze an das vorgegebene Programm übergeben werden können. Zum Erhalt der notwendigen Eichsicherheit ist in diesem Fall sowohl die Anzeigeeinrichtung als auch der Drucker nur über das vorgegebene Programm ansteuerbar. Das kann beispielsweise unter Rückgriff auf von üblichen Betriebssystemen, wie etwa Windows NT, bereitgestellten Routinen erfolgen, mit denen es möglich ist, vorgegebene Hardware-Ressourcen, wie etwa Hardware-Schnittstellen, exklusiv für vorgegebene Programme zu reservieren, so daß kein anderes Programm auf diese Hardware-Ressourcen zugreifen kann. Dabei ist es bei einer besonders bevorzugten Ausführungsform vorgesehen, daß das vorgegebene Programm eine weitere Prüfroutine aufweist, mit der überprüft wird, ob die Signalverarbeitungseinrichtung zum Abgeben von Gewichtsdaten freigegeben ist, und die Sichtdarstellung bzw. den Ausdruck der von dem weiteren Programm erzeugten Informationsinhalte nur freigibt, wenn die Abgabe von Gewichtdaten von der Signalverarbeitungseinrichtung nicht freigegeben bzw. gesperrt ist. Durch Einsatz dieser weiteren Prüfroutine ist es möglich, die Anzeigeeinrichtung der Waage bzw. den Drucker zur Sichtdarstellung bzw. zum Ausdrucken beliebiger Informationsinhalte zu benutzen, sofern die Waage für einen Wägebetrieb gesperrt ist, ohne dadurch die Eichsicherheit zu gefährden, weil auch in diesem Fall die Ansteuerung des Druckers und der Anzeigeeinrichtung ausschließlich über den eichpflichtigen, geschützten Programmteil erfolgt. In diesem Zusammenhang ist es weiter möglich, nur einzelne Anzeigefelder der Anzeigeeinrichtung für die Sichtdarstellung der Wägedaten zu reservieren und die übrigen Anzeigefelder für die Sichtdarstellung anderer Informationsinhalte freizugeben, wobei die für die Sichtdarstellung der Wägedaten reservierten Anzeigefelder für die Sichtdarstellung anderer Informationsinhalte freigegeben werden, sobald mit der Prüfroutine festgestellt wird, daß die Übergabe von Gewichtsdaten von der Signalverarbeitungseinrichtung gesperrt ist. Dabei kann die Freigabe bzw. Sperrung der Signalverarbeitungseinrichtung durch Eingabe eines Freigabe- bzw. Sperrsignals über eine geeignete Eingabeeinrichtung, wie etwa eine Eingabetastatur, eine zum Herstellen einer Verbindung mit einem anderen Gerät o. dgl. , erfolgen.

Eine weitere Sicherung der erfindungsgemäßen Waage gegen einen nicht autorisierten Zugriff auf die Wägedaten kann erfolgen, wenn das vorgegebene Programm eine dritte Prüfroutine aufweist, mit der ein von dem weiteren Programm übergebenes Passwort mit einem in dem vorgegebenen Programm enthaltenen Passwort verglichen und die Übergabe von Datensätzen nur freigegeben wird, wenn eine Übereinstimmung zwischen den Passwörtem festgestellt wird. Dadurch wird sichergestellt, daß von dem vorgegebenen Programm nur an solche Programme Datensätze übergeben werden können, welche sich gegenüber dem vorgegebenen Programm als berechtigt ausweisen können. Diese Authentifizierung der frei programmierbaren Programmteile erfolgt in besonders vorteilhafter Ausgestaltung der Erfindung durch das sog. Challenge-Response-Verfahren. Dabei erhält das vorgegebene Programm von dem frei programmierbaren Programmteil die Anweisung einen zufälligen Wert (= challenge) an den frei programmierbaren Programmteil zu übersenden. Dann modifiziert der frei programmierbare Programmteil diesen übergebenen Wert nach einem allgemein bekannten Algorithmus (CRC32) in den jedoch ein geheimer Schlüsselwert eingeht. Die so auf Grundlage des zufälligen Wertes ermittelten Verschlüsselungsdaten werden dann erneut an das vorgegebene Programm übergeben und mit diesem vorgegebenen Programm mit von dem vorgegebenen Programm auf Grundlage des zufälligen Wertes ermittelten Verschlüsselungsdaten verglichen. Nur wenn das vorgegebene Programm eine Übereinstimmung der Verschlüsselungsdaten feststellt, wird ein Zugriff des frei programmierbaren Programmteils auf das vorgegebene Programm bzw. eine Übertragung der Datensätze von dem vorgegebenen Programm an das frei programmierbare Programm freigegeben.

Zweckmäßigerweise weist die Signalverarbeitungsanordnung eine Speichereinrichtung zum Ablegen der aus den Gewichtsdaten und den dazugehörigen Verschlüsselungsdaten bestehende Datensätze auf. Im Hinblick auf die eingangs erläuterte Verwendung erfindungsgemäßer Waagen zum Abwickeln von eine Vielzahl von Wägevorgängen umfassenden Verkaufsvorgängen hat es sich als besonders zweckmäßig erwiesen, wenn die Speichereinrichtung eine Mehrzahl von vorgegebenen Speicherbereichen aufweist, von denen jeder zum Ablegen von im Verlauf eines eine Mehrzahl von Wägevorgängen umfassenden Buchungsvorganges erzeugten Wägedaten umfassende Buchungsdaten und der dazugehörigen Verschlüsselungsdaten ausgelegt ist. Zum Identifizieren der einzelnen Buchungsdaten ist es besonders sinnvoll, wenn die vorgegebenen Speicherbereiche zum Ablegen von den den jeweiligen Buchungsvorgang bezeichnenden Kennungsdaten und daraus erzeugten Verschlüsselungsdaten in Form von Kopfdaten für die Buchungsdaten ausgelegt sind. Dabei können diese Kopfdaten beispielsweise die Nummer des Gerätes, auf dem die ersten Wägedaten des Buchungsvorganges erzeugt worden sind, die Uhrzeit und das Tagesdatum zu der die erste Buchung erfolgt ist, sowie eine auf Grundlage dieser Daten ermittelte Prüfsumme (Verschlüsselungsdaten) umfassen.

Im Hinblick auf die einschlägigen eichrechtlichen Vorschriften muß bei erfindungsgemäßen Waagen verhindert werden, daß die zu einem Buchungsvorgang gehörigen Buchungsdaten mehrfach ausgedruckt werden. In diesem Zusammenhang hat es sich als besonders zweckmäßig erwiesen, wenn die Kopfdaten nach Ausdruck der entsprechenden Buchungsdaten ggf. zusammen mit weiteren Daten in einem Druckerspeicherbereich der Speichereinrichtung abgelegt werden. In diesem Fall kann ein Doppelabdruck der Buchungsdaten mit der Waage verhindert werden, wenn die Signalverarbeitungsanordnung eine vierte Prüfroutine aufweist, mit der die Kopfdaten der auszudruckenden Buchungsdaten mit den im Buchungsspeicherbereich bereits abgelegten Kopfdaten verglichen werden und der Ausdruck nur freigegeben wird, wenn keine Übereinstimmung zwischen diesen Daten festgestellt wird.

Wie vorstehend bereits erläutert, ist es zum Abwickeln von Verkaufsvorgängen an mehreren Verkaufsgeräten besonders zweckmäßig, wenn die Signalverarbeitungsanordnung zum Empfangen von vorzugsweise in Form von Buchungsdaten mit dazugehörigen Kopfdaten und Verschlüsselungsdaten, insbesondere von einem weiteren Programm und/oder einer anderen Waage, ausgelegt ist und die Verschlüsselungseinrichtung zum Verschlüsseln der empfangenen Daten und zum Vergleichen der so erhaltenen Verschlüsselungsdaten mit den empfangenen Verschlüsselungsdaten betreibbar ist und die weitere Verarbeitung der empfangenen Wägedaten mit dem vorgegebenen Programm nur freigibt, wenn diese Verschlüsselungsdaten übereinstimmen. In diesem Fall kann der Doppelabdruck von Buchungsdaten an verschiedenen im Verlauf eines Verkaufsvorganges benutzten Geräten, insbesondere Waagen, verhindert werden, wenn die Signalverarbeitungsanordnung zum Vergleichen der empfangenen Wägedaten, insbesondere Kopfdaten mit den in dem Druckerspeicherbereich abgelegten Daten betreibbar ist und die weitere Verarbeitung der empfangenen Daten nur freigibt, wenn keine Übereinstimmung mit den im Druckerspeicherbereich abgelegten Daten festgestellt wird.

Beim Betrieb erfindungsgemäßer Waagen ist es im Hinblick auf die eichrechtlichen Vorschriften im allgemeinen erforderlich, daß die Anzeige der Wägedaten auch dann sichergestellt wird, wenn mit Hilfe der Anzeigeeinrichtung der Waage auch von anderen, nichteichpflichtigen Programmteilen erzeugte Informationsinhalte dargestellt werden. Zur Sicherstellung der Sichtdarstellung der eichrechtlich relevanten Daten während des Wägebetriebes weist die Signalverarbeitungsanordnung der erfindungsgemäßen Waage zweckmäßigerweise eine zum Überwachen der Sichtdarstellung der Wägedaten betreibbaren Überwachungseinrichtung auf. Dabei ist im besonderen an den Einsatz solcher Ausführungsformen gedacht, bei denen die Wägedaten innerhalb eines von dem Betriebssystem zur Verfügung gestellten Anzeigefensters (Windows-Fenster) angezeigt werden, dem eine feste Größe und Position zugeordnet und mit Hilfe des Betriebssystems die Eigenschaft verliehen wird, daß es sich immer im Vordergrund befindet. Dann kann mit dem vorgegebenen Programm in kurzen Abständen kontrolliert werden, ob sich das Fenster noch im Vordergrund befindet. Falls bei dieser Kontrolle festgestellt wird, daß das Fenster von einem von einem frei programmierbaren Programmteil erzeugten Fenster überlagert wird, kann es automatisch in den Vordergrund gebracht werden. Alternativ ist in diesem Fall auch daran gedacht, den Wägebetrieb der Signalverarbeitungseinrichtung umgehend zu unterbrechen und/oder eine Fehlermeldung anzuzeigen. Weiter ist an eine Verwirklichung der Überwachungseinrichtung gedacht, mit der zusätzlich oder alternativ zu der gerade beschriebenen Kontrolle in einem zyklischen Ablauf immer wieder eine Betriebssystemfunktion aufgerufen wird, die dafür sorgt, daß das zur Sichtdarstellung der Wägedaten zur Verfügung gestellte Fenster über allen anderen Fenstern liegt. Dabei kann vorgesehen sein, daß die Signalverarbeitungseinrichtung automatisch gesperrt wird, sobald diese Überwachungseinrichtung durch einen frei programmierbaren Programmteil lahmgelegt wird, was zur Folge hat, daß das Lesen der Gewichtswerte hardwaremäßig blockiert wird.

Wie vorstehend bereits erläutert, ist auch an einen Betrieb der erfindungsgemäßen Waage ohne Ausführung einer Wägefunktion gedacht, bei dem die gesamte Anzeigeeinrichtung zur Sichtdarstellung von in frei programmierbaren Programmteilen erzeugten Informationsinhalten genutzt werden kann. Für diesen Fall weist die Signalverarbeitungsanordnung zweckmäßigerweise eine Aktivierungseinrichtung auf, mit der die Überwachungseinrichtung aktiviert wird, sobald mit der weiteren Prüfroutine festgestellt wird, daß die Signalverarbeitungseinrichtung zum Abgeben von Gewichtsdaten freigegeben ist.

Zum Eingeben von Kennungsdaten, anderen warenbezogenen oder verkaufsvorgangsbezogenen Daten oder für den Ablauf von frei programmierbaren Programmen benötigten Daten kann die erfindungsgemäße Waage eine Eingabeeinrichtung zum Eingeben von Kennungsdaten, zur Verarbeitung der Gewichtsdaten benötigten Daten und/oder anderer Daten benötigen. Diese Eingabeeinrichtung kann eine Eingabetastatur, einen Strichcodeleser, einen Scanner, einen zum Empfangen von von einem Transponder abgegebenen Signale ausgelegten Empfänger und/oder eine Spracherkennungseinrichtung umfassen.

Wie eingangs bereits erläutert, wird die erfindungsgemäße Waage mit besonderem Vorteil in einem Verbundsystem mit mindestens einer Waage und mindestens einem weiteren Gerät, vorzugsweise Verkaufsgerät, insbesondere einer weiteren Waage sowie einer zum Übertragen von Datensätzen zwischen diesen Geräten betreibbaren Datenübertragungseinrichtung eingesetzt. Dabei kann die Datenübertragungseinrichtung ein Netzwerk, wie etwa ein LAN, ein Intranet oder das Internet umfassen. Ferner ist auch an den Einsatz von Datenübertragungseinrichtungen mit mindestens einem Sender und mindestens einem Empfänger zur drahtlosen Übertragung der Datensätze gedacht. Wie aus der vorstehenden Erläuterung erfindungsgemäßer Waagen hervorgeht, zeichnet sich ein erfindungsgemäßes Verfahren zum Betreiben einer Waage, bei dem bei jedem Wägevorgang das Gewicht einer Last darstellende Gewichtssignale erzeugt und an eine zum Erzeugen von Gewichtsdaten, daraus abgeleiteten Angaben und/oder Kennungsdaten umfassende Wägedaten betreibbare Signalverarbeitungsanordnung übertragen werden, im wesentlichen dadurch aus, daß zumindest ein Teil der Wägedaten verschlüsselt und in Form eines Datensatzes zusammen mit den so erhaltenen Verschlüsselungsdaten ausgegeben und/oder in einer Speichereinrichtung abgelegt wird, wobei in besonders vorteilhafter Ausgestaltung der Erfindung daran gedacht ist, daß die Sichtdarstellung der Wägedaten mit einer Anzeigeeinrichtung der Waage fortlaufend überwacht wird. Ferner ist unter Einsatz der erfindungsgemäßen Waagen ein erfindungsgemäßes Verfahren zum Betreiben eines Verbundsystems ausführbar, bei dem Wägedaten und daraus erzeugte Verschlüsselungsdaten aufweisende Datensätze zwischen den einzelnen Geräten des Verbundsystems übertragen werden, welches im wesentlichen dadurch gekennzeichnet ist, daß es die Wägedaten der übertragenen Datensätze verschlüsselt und die so erhaltenen Verschlüsselungsdaten mit den übertragenen Verschlüsselungsdaten der Datensätze verglichen werden, wobei die weitere Verarbeitung der übertragenen Datensätze nur freigegeben wird, wenn eine Übereinstimmung zwischen diesen Verschlüsselungsdaten festgestellt wird.

Nachstehend wird beispielhaft ein Verkaufsvorgang unter Verwendung eines erfindungsgemäßen Verbundsystems erläutert. In den einzelnen Geräten des Verbundsystems werden für alle Buchungsvorgänge interne Buchungsspeicherbereiche (Bs) geführt. Soll der Inhalt eines Buchungsspeicherbereiches an ein anderes Gerät übertragen werden, so muß von dem die Datenübertragung ausführenden Programm die Nummer des Zielgerätes angegeben werden. Dabei kann über die Nummer des Zielgerätes eine Prüfsumme gebildet werden.

Der Zusammenhang zwischen den Buchungsspeicherbereichen und einzelnen den Verkaufsvorgang ausführenden Verkäufern hat keine eichtechnische Relevanz. Wichtig für die Zusammengehörigkeit der im Verlauf eines Wägevorgangs erzeugten Wägedaten ist allein die Nummer des Buchungsspeichers. Das bedeutet, daß der frei programmierbare Programmteil dafür sorgen muß, daß die Wägedaten in den richtigen Buchungsspeicher eingetragen werden. Das kann beispielsweise dadurch erfolgen, daß für jeden Wägevorgang eine dem jeweiligen Verkäufer zugeordnete Verkäufertaste gedrückt wird. Die Buchungsspeicherbereiche selbst können nicht angelegt oder gelöscht werden. Sie werden von dem vorgegebenen, eichpflichtigen und daher gesicherten Programm in ausreichender Anzahl zur Verfügung gestellt. Diese Anzahl bestimmt auch die maximale Anzahl an Buchungsvorgängen die gleichzeitig ausgeführt werden können. Dabei gibt es in allen Geräten des Verbundsystems die gleiche Anzahl von Buchungsspeichern. Alternativ zur Verkäufernummer kann man zur Zuordnung einzelner Wägevorgänge zu vorgegebenen Buchungsspeicherbereichen auch mit sog. Körbchennummern arbeiten, das bedeutet, daß nicht der Verkäufer zusammen mit dem Kunden von Gerät zu Gerät bzw. von Waage zu Waage wandert, sondern jeder Kunde ein Körbchen mit einer bestimmten Nummer erhält, welches von Waage zu Waage weitergereicht wird. Alle Buchungsdaten weisen einen Kopfteil mit den in der folgenden Tabelle aufgeführten Informationen auf, welche über eine Prüfsumme gegen Manipulationen geschützt sind. Beim Eintrag der ersten Wägedaten in den Buchungsspeicherbereich werden diese Informationen erzeugt. Weitere Eintragungen von Wägedaten in den gleichen Buchungsspeicherbereich ändern daran nichts mehr.

**Tabelle 1**

| **Bon-Originator** | **Startzeit u. Datum** | **CRC** |
|---|---|---|
| Nummer des Gerätes mit dem die ersten Verkaufsdaten erzeugt wurden. | Uhrzeit und Tagesdatum zu der die ersten Verkaufsdaten erzeugt wurden. | Prüfsumme |

Nach dem in der folgenden Tabelle aufgezeichneten Schema speichert jedes Gerät alle Wägedaten in internen Buchungsspeicherbereichen (Bs 1 bis Bs(N)). Außerdem erfolgt nach dem Abdruck der in einem Buchungsspeicherbereich abgelegten Daten sowie beim Anfordern der Buchungsdaten für ein anderes Gerät eine Neuinitialisierung des entsprechenden Buchungsspeicherbereich. Das heißt, daß alle Einträge dieses Buchungsspeicherbereiches gelöscht werden und ein neuer Buchungsvorgang begonnen werden kann.

**Tabelle 2**

| **Bs 1** | **Bs 2** | **Bs ...** | **Bs N** |
|---|---|---|---|
| Kopfteil | .. | .. | Kopfteil |
| Buchung 1 | .. | .. | Buchung 1 |
| Buchung 2 | .. | .. | Buchung 2 |
| ... | .. | .. | ... |
| Buchung M | .. | .. | Buchung M |

Beim Abdruck der in einem Buchungsspeicherbereich abgelegten Buchungsdaten wird die in einem Druckerspeicherbereich des Gerätes protokolliert, indem Kopfteil der abgedruckten Buchungsspeicherdaten in einer Datei abgelegt wird. Außerdem wird der Zeitpunkt des Abdrucks mitprotokolliert. Der Eintrag selbst erfolgt vor dem Abdruck. Die Kennzeichnung für Erfolg des Abdrucks wird nach dem vollständigen Abdruck eingetragen. Über die gesamte Datei wird eine Prüfsumme gebildet, die hinten angehängt wird. Die Protokollierung der Druckdaten erfolgt entsprechend der folgenden Tabelle.

**Tabelle 3**

| **Druckzeit u. Datum** | **Bon-Originator** | **Startzeit u. Datum** | **Erfolg** |
|---|---|---|---|
| YYYYMMTThhmmss | G(X) | YYYYMMTThhmmss | 1 |
| YYYYMMTThhmmss | G(Y) | YYYYMMTThhmmss | 1 |
| ... | ... | ... | ... |
| YYYYMMTThhmmss | G(Z) | YYYYMMTThhmmss | 0 |

Der Druckerspeicherbereich wird nach dem Ringpufferverfahren geführt. Das heißt, daß nach einer vorgegebenen Anzahl von Druckvorgängen der ersten Eintragung überschrieben wird.

Ausgehend von der Annahme, daß in einem Gerät (X) (G(X)) diverse Buchungen in dem Buchungsspeicherbereich N (Bs(N)) erfolgt sind, ergibt sich bei der Fortsetzung des entsprechenden Verkaufsvorganges an einem anderen Gerät der folgende Ablauf:

Soll in einem Gerät Y (G(Y)) eine Buchung auf den Buchungsspeicherbereich Bs(N) erfolgen, wird von einem frei programmierbaren Programmteil zuerst dieser Buchungsspeicher aus dem Gerät G(X) ausgelesen, um ihn in dem entsprechenden Buchungsspeicherbereich des Gerätes G(Y) eintragen zu können. Dazu fordert der frei programmierbare Programmteil die entsprechenden Buchungsdaten unter Angabe des Zielgerätes G(Y) von dem Gerät G(X) an. Daraufhin wird der in der folgenden Tabelle dargestellte Datensatz an den frei programmierbaren Programmteil übergeben.

**Tabelle 4**

| Bon-Originator | Startzeit u. Datum | | CRC | |
|---|---|---|---|---|
| Buchung 1 | | | | |
| Buchung 2 | | | | |
| Buchung ... | | | | |
| Bs(N) | | G(X) | G(Y) | CRC |
| Buchungsspeicher N | | Von Gerät | Zu Gerät | CRC |

Die letzte Zeile dieses Datensatzes wird von dem vorgegebenen Programm erzeugt und an die Buchungsdaten angehängt.

Der frei programmierbare Programmteil überträgt dann den gegebenen Datensatz über eine frei wählbare Übertragungseinrichtung an das Gerät G(Y). In dem Gerät G(Y) gibt der frei programmierbare Programmteil den Datensatz an den eichpflichtigen, gesicherten Programmteil des Gerätes G(Y) ab. In dem Gerät G(X) wird nach Übergabe der Daten an den frei programmierbaren Programmteil der entsprechende Buchungsspeicherbereich (Bs(N)) zurückgesetzt bzw. gelöscht. Mit dem vorgegebenen gesicherten Programm des Gerätes G(Y) werden die folgenden Bedingungen überprüft:
1. Ist der Buchungsspeicher Bs(N) momentan frei (keine Einträge vorhanden)?
2. Stimmt die Nummer des Zielgerätes mit der lokalen Gerätenummer überein?
3. Ist die übertragende Kopfzeile (Bon-Originator, Startzeit und Datum) auch nicht im Druckerspeicherbereich dieses Gerätes vorhanden?

Falls diese Bedingungen erfüllt sind, werden die übertragenen Buchungsdaten von dem vorgegebenen Programm des Gerätes G(Y) in den entsprechenden Buchungsspeicherbereich (Bs(N)) dieses Gerätes eingetragen. Dann ergibt sich in der Speichereinrichtung des Gerätes G(Y) folgender Zustand:

**Tabelle 5**

| **Bs 1** | **Bs 2** | **Bs ...** | **Bs N** |
|---|---|---|---|
| Kopfteil | .. | .. | Kopfteil |
| ... | .. | .. | Buchung 1 |
| ... | .. | .. | Buchung 2 |
| ... | .. | .. | ... |

In dem Gerät G(Y) ist jetzt registriert, daß von G(X) die Buchungsdaten im Buchungsspeicherbereich Bs(N) erhalten wurden. Würde ein frei programmierbarer Programmteil versuchen, dieselben Buchungsdaten zweimal zu übertragen, so würde dies anhand der Kopfdaten bemerkt werden. Werden die Buchungsdaten von G(Y) ausgedruckt, wird der Eintrag in dem entsprechenden Druckerspeicherbereich dieses Gerätes gemacht und der entsprechende Druckerspeicherbereich gelöscht. Hierdurch wird verhindert, daß die Buchungsdaten zweimal ausgedruckt werden.

## Patentansprüche

1. Waage, mit einer bei jedem Wägevorgang zum Erzeugen von das Gewicht einer Last darstellenden Gewichtssignalen betreibbaren Wägezelle und einer die Gewichtssignale empfangenden Signalverarbeitungsanordnung zum Erzeugen von Gewichtsdaten auf Grundlage der Gewichtssignale, auf Grundlage der Gewichtsdaten ermittelten Angaben, wie etwa Kaufpreisen, und/oder den jeweiligen Wägevorgang oder eine Gruppe von zusammengehörigen Wägevorgängen bezeichnenden Kennungsdaten aufweisenden Wägedaten und einer von der Signalverarbeitungsanordnung zur Sichtdarstellung zumindest eines Teils der Wägedaten ansteuerbaren Anzeigeeinrichtung, **dadurch gekennzeichnet, daß** die Signalverarbeitungsanordnung eine zum Überwachen der Sichtdarstellung der Wägedaten betreibbare Überwachungseinrichtung aufweist.

2. Waage nach Anspruch 1, **dadurch gekennzeichnet, daß** die Signalverarbeitungsanordnung eine Aktivierungseinrichtung aufweist, mit der die Überwachungseinrichtung aktiviert wird, sobald mit der weiteren Prüfroutine festgestellt wird, daß die Signalverarbeitungseinrichtung zum Abgeben von Gewichtsdaten freigegeben ist.

3. Waage nach einem der Ansprüche 1 oder 2, **gekennzeichnet durch** eine Eingabeeinrichtung zum Eingeben von Kennungsdaten und/oder zur Verarbeitung der Gewichtsdaten benötigten Daten und/oder weiteren Daten.

4. Verbundsystem mit mindestens einer Waage nach einem der vorhergehenden Ansprüche und mindestens einem weiteren Gerät, vorzugsweise Verkaufsgerät, insbesondere Waage, sowie einer zum Übertragen von Datensätzen zwischen diesen Geräten betreibbaren Datenübertragungseinrichtung.

5. Verbundsystem nach Anspruch 4, **dadurch gekennzeichnet, daß** die Datenübertragungseinrichtung ein Netzwerk, wie etwa ein LAN, ein Intranet oder das Internet umfaßt.

6. Verbundsystem nach Anspruch 4 oder 5, **dadurch gekennzeichnet, daß** die Datenübertragungseinrichtung mindestens einen Sender und mindestens einen Empfänger zur drahtlosen Übertragung der Datensätze aufweist.

7. Verfahren zum Betreiben einer Waage, bei dem bei jedem Wägevorgang das Gewicht einer Last darstellende Gewichtssignale erzeugt und an eine zum Erzeugen von Gewichtsdaten, daraus abgeleiteten Angaben und/oder Kennungsdaten umfassende Wägedaten betreibbare Signalverarbeitungsanordnung übertragen werden und eine Anzeigeeinrichtung zum Erzeugen einer Sichtdarstellung von zumindest einem Teil der Wägedaten angesteuert wird, **dadurch gekennzeichnet, daß** die Bilddarstellung der Wägedaten überwacht wird.

8. Verfahren nach Anspruch 7, wobei die Waage Teil eines Verbundsystems nach einem der Ansprüche 4 bis 6 ist, **dadurch gekennzeichnet, daß** Wägedaten und daraus erzeugte Verschlüsselungsdaten aufweisende Datensätze zwischen den einzelnen Geräten des Verbundsystems übertragen werden und die Wägedaten der übertragenen Datensätze verschlüsselt und die so erhaltenen Verschlüsselungsdaten mit den übertragenen Verschlüsselungsdaten der Datensätze verglichen werden, wobei die weitere Verarbeitung der übertragenen Datensätze nur freigegeben wird, wenn eine Übereinstimmung zwischen diesen Verschlüsselungsdaten festgestellt wird.
